# EUROPÄISCHE PATENTANMELDUNG

(11) **EP 1 197 422 A2**
(43) Veröffentlichungstag der Anmeldung: **17.04.2002**
(21) Anmeldenummer: 01123003.4
(22) Anmeldetag: 26.09.2001
(51) Int. Cl.: B62D 65/00

(54) **Einrichtung und Verfahren zum Positionieren von Transportfahrzeugen in Arbeitsstationen**

(30) Priorität: 18.10.2000 AT 17872000
(71) Anmelder: VA TECH Transport- und Montagesysteme GmbH & Co, 4031 Linz (AT)
(72) Erfinder: Schupp, Gerhard, 86316 Friedberg 2 (DE); Weiss, Lothar, 4050 Traun (AT)
(74) Vertreter: VA TECH Patente GmbH & Co

(57) **Zusammenfassung**

Transportfahrzeuge werden in der Regel mit aufwendigen Positioniereinrichtungen, wie Hebeeinrichtungen oder Zentriereinrichtungen, zur Bearbeitung der mit diesem Transportfahrzeug transportierten Bauteilen positioniert. Neben der aufwendigen Positionierung wird durch diesen zusätzlichen Arbeitsschritt die Taktzeit verkürzt. Das durch die vorliegende Erfindung zu lösende Problem ist, eine Einrichtung anzugeben, mit der die genaue Positionierung eines Transportfahrzeuges (1) mir einfachen Mitteln selbsttätig, ohne zusätzliche, angetriebene Hebeeinrichtungen und ohne Zeitverlust möglich ist. Dieses Problem wird vorrangig dadurch gelöst, dass zur Positionierung des Transportfahrzeuges (1) in vertikaler Richtung zumindest eine Referenzfläche (4z) und zumindest ein zugehöriges Gleitelement (5z) vorgesehen sind, wobei die Referenzfläche (4z) und das Gleitelement (5z) relativ zueinander bewegbar sind und das Transportfahrzeug (1) beim Auflaufen des Gleitelementes (5z) auf die Referenzfläche (4z) durch die Längsbewegung des Transportfahrzeuges (1) selbstständig positionierbar ist.

## Beschreibung

Die vorliegende Erfindung beschreibt ein Transportfahrzeug, beispielsweise ein Skid, zum Transportieren von Bauteilen, beispielsweise Karosserieteile oder Frames, mit einem Antrieb zum Bewegen des Transportfahrzeuges in Längsrichtung, einer Führungseinrichtung zum Führen des Transportfahrzeuges, z.B. Führungsschienen, und einer Positioniereinrichtung zum Positionieren des Transportfahrzeuges in vertikaler Richtung und/oder in Richtung quer zur Fahrtrichtung, sowie ein zugehöriges Verfahren.

Eine Produktionsstraße besteht in der Regel aus mehreren Arbeitsstationen und mehreren Transportfahrzeugen, die die Bauteile zwischen den Arbeitsstationen hin- und herbewegen. Um die Anforderungen an den Antrieb und die Antriebssteuerung der Transportfahrzeuge möglichst niedrig zu halten, werden die Transportfahrzeuge erst in der Arbeitsstation für den jeweiligen Arbeitsschritt exakt positioniert. Die Ausrichtung muss in der Regel in alle drei Richtungen, vertikal, in und quer zur Fahrtrichtung, erfolgen. Dazu sind in den Arbeitsstationen und an den Transportfahrzeugen Referenzflächen vorgesehen über die die Transportfahrzeuge ausgerichtet werden. Zur Ausrichtung in der vertikalen Richtung muss das Transportfahrzeuge in der Regel angehoben werden. Insbesondere bei schweren Transportfahrzeugen bzw. Bauteilen stellt dies einen erheblichen Aufwand dar.

In der DE 42 32 497 ist eine Vorrichtung und ein Verfahren zur Positionierung von Autokarosserien in eine vorgegebene Position auf einem Transportpfad eines Fließbandes geoffenbart. Die Karosserieteile werden mit einem Pendelförderer zwischen den einzelnen Arbeitsstationen transportiert. Die Vorrichtung weist Einrichtungen zum Positionieren der Autokarosserien in den drei Koordinatenrichtungen auf. Zur Positionierung in vertikale Richtung wird der Pendelförderer mit der Autokarosserie angehoben, längsverschoben und die Autokarosserie anschließend auf eine Referenzfläche abgesenkt.

Die vorliegende Erfindung stellt sich die Aufgabe eine Einrichtung anzugeben, mit der die genaue Positionierung eines Transportfahrzeuges in zumindest vertikaler Richtung mit einfachen Mitteln selbsttätig, ohne zusätzliche, angetriebene Hebeeinrichtungen, bzw. ohne anderen zusätzlichen aktiven Hilfsvorrichtungen, und ohne Zeitverlust möglich ist.

Diese Aufgabe ist erfindungsgemäß dadurch gelöst, dass zur Positionierung des Transportfahrzeuges in vertikaler Richtung zumindest eine Referenzfläche und zumindest ein zugehöriges Gleitelement vorgesehen ist, wobei die Referenzfläche und das Gleitelement relativ zueinander bewegbar sind und dass das Transportfahrzeug beim Auflaufen des Gleitelementes auf die Referenzfläche durch die Längsbewegung des Transportfahrzeuges zumindest in der vertikalen Richtung selbstständig positionierbar ist. Für das Verfahren wird die Aufgabe erfindungsgemäß dadurch gelöst, dass beim Auffahren zumindest eines Gleitelementes, vorzugsweise drei oder vier Gleitelemente, auf zumindest eine, vorzugsweise drei oder vier, zugehörige Referenzflächen das Transportfahrzeug in der vertikalen Richtung auf eine bestimmte vorgegebene Position positioniert wird.
Durch die Anordnung einer Referenzfläche und eines Gleitelementes wird das Transportfahrzeug selbsttätig durch die eigene Bewegung des Transportfahrzeuges auf die gewünschte Position angehoben. Dadurch entfallen aufwendige Hebeeinrichtungen, die die Transportfahrzeuge in die entsprechende Position heben, was die Kosten einer Positioniereinrichtung verringert.
Die Referenzflächen und Gleitelemente können mit beliebiger Genauigkeit, je nach Bedarf und Anwendung, gefertigt werden, was eine erfindungsgemäße Positioniereinrichtung sehr flexibel macht. Überdies kann die Positioniereinrichtung sehr rasch auf andere Transportfahrzeuge eingestellt werden.
Darüber hinaus lassen sich die Zeiten zum Positionieren deutlich verkürzen bzw. eliminieren, da das Transportfahrzeug bereits während der Bewegung selbsttätig positioniert wird. Es muss also nicht abgewartet werden, bis das Transportfahrzeug stillsteht, um in Folge angehoben werden zu können. Dadurch verbilligt sich der Betrieb eines erfindungsgemäßen Transportfahrzeuges und der mögliche Durchsatz wird erhöht.

Die Positionierung des Transportfahrzeuges in Richtung quer zur Fahrtrichtung kann vereinfacht werden, wenn der Antrieb und die Führungseinrichtung an zumindest einem Ende des Transportfahrzeugs als Positioniereinrichtung in Richtung quer zur Fahrtrichtung ausführbar sind. Somit können weiter Kosten eingespart werden, da ein Antrieb und eine Führungseinrichtung sowieso schon vorhanden sind.

ist zur eindeutigen Positionierung des Transportfahrzeuges in der Richtung quer zur Fahrtrichtung und/oder in Fahrtrichtung zumindest ein Zentrierdorn mit zumindest einer zugehörigen Zentrierbohrung vorgesehen und ist der Antrieb und/oder die Führungseinrichtung in Richtung quer zur Fahrtrichtung bewegbar, so erhält man eine Positioniereinrichtung die sehr genau betrieben werden kann.

In einer weiteren, besonders vorteilhaften Ausführungsform sind zur eindeutigen Positionierung des Transportfahrzeuges in der Richtung quer zur Fahrtrichtung auf zumindest einer Seite zumindest eine Referenzfläche und zumindest ein zugehöriges Gleitelement vorgesehen, mittels der das Transportfahrzeug beim Auflaufen des Gleitelementes auf die Referenzfläche durch die Längsbewegung des Transportfahrzeuges in Richtung quer zur Fahrtrichtung selbstständig positionierbar ist und der Antrieb und/oder die Führungseinrichtung in Richtung quer zur Fahrtrichtung eine Ausgleichsbewegung zulassen. Hier ergibt sich wiederum eine Positioniereinrichtung die selbsttätig und automatisch durch die Bewegung des Transportfahrzeuges betrieben wird. Da man sich dadurch zusätzlich Positioniereinrichtungen zur Positionierung des Transportfahrzeuges in der Richtung quer zur Fahrtrichtung erspart, können die Kosten und der Herstellungsaufwand weiter verringert und die Konstruktion des Transportfahrzeuges vereinfacht werden.
Analog zur Positionierung in vertikaler Richtung ergibt sich wiederum eine sehr vorteilhafte Verkürzung der Positionierzeiten.
Eine besonders einfache und betriebssichere Variante erhält man, wenn in der Richtung quer zur Fahrtrichtung auf einer Seite des Transportfahrzeuges zumindest eine Referenzfläche und ein zugehöriges Gleitelement vorgesehen sind und auf der gegenüberliegenden Seite zumindest ein gefedertes Gegendruckelement vorgesehen ist. Dadurch stellt man eine zuverlässige und gleichzeitig sehr einfache Positionierung sicher, da das Transportfahrzeug durch das Gegendruckelement sicher gegen die Referenzflächen gedrückt wird.
Eine weitere mögliche Alternative erhält man, wenn an beiden Seiten des Transportfahrzeuges zumindest je eine Referenzfläche und zumindest je ein zugehöriges Gleitelement vorgesehen sind.

In einer besonders vorteilhaften Ausführungsform ist an zumindest einer Referenzfläche eine Anlaufschräge vorgesehen. Durch die Anlaufschräge wird die Positionierung kontinuierlich verlaufend und nicht abrupt durchgeführt, was die Belastungen der Referenzflächen und der Gleitelemente deutlich verringert und somit die Lebensdauer wesentlich erhöht.

Die Referenzflächen können am Transportfahrzeug und die zugehörigen Gleitelemente stationär oder umgekehrt angeordnet sein, was die Flexibilität der Ausführung eines erfindungsgemäßen Transportfahrzeuges erhöht.

In einer weiteren sehr vorteilhaften Ausführungsform ist zumindest ein Gleitelement zum vertikalen Positionieren und/oder zumindest ein Gleitelement zum Positionieren in der Richtung quer zur Fahrtrichtung so schräg gestellt, dass damit gleichzeitig eine Positionierung des Transportfahrzeuges in der Richtung quer zur Fahrtrichtung und in der vertikalen Richtung möglich ist. Dadurch können Referenzflächen und Gleitelemente eingespart werden.
Eine günstige Ausführungsform ergibt sich, wenn zumindest ein Gleitelement doppelkegelförmig ausgeführt ist und auf zugehörige entsprechend geformte Referenzflächen, z.B. ein dachförmiges oder zylindrisches Schienenstück, auflaufbar ist.

Der Betrieb eines erfindungsgemäßen Transportfahrzeuges wird wesentlich vereinfacht, wenn die Gleitelemente und/oder die Referenzfläche zur Positionierung in der Richtung quer zur Fahrtrichtung und/oder vertikalen Richtung justierbar sind, da dann bei Bedarf die Positioniereinrichtung einfach nachjustiert werden kann, um z.B. Abnützungen oder dergleichen auszugleichen oder andere Positionen einzustellen.

Als besonders einfaches Gleitelement ist eine Referenzrolle vorgesehen, die einfach, schnell, mit verschiedenen Genauigkeiten und günstig hergestellt werden kann. Weiters weisen Rollen ein sehr günstiges Verschleißverhalten auf, was die Lebensdauer der Positioniereinrichtung erhöht.

Eine besonders einfache Positioniereinrichtung in Fahrtrichtung erhält man, wenn zur Positionierung ein Anschlag vorgesehen ist.
Als eine mögliche Alternative zur Positionierung des Transportfahrzeuges in Fahrtrichtung wird ein frequenzgeregelter Antrieb oder ein Servoantrieb vorgesehen.
Dies verkürzt die Positionierzeiten noch weiter.

Je nach Bedarf und Anwendung ist das Transportfahrzeug auf einer Rollenbahn bewegbar oder es sind am Transportfahrzeug Bockrollen vorgesehen auf denen das Transportfahrzeug bewegbar ist, Eine weitere Vereinfachung erhält man, wenn zumindest zwei Bockrollen als Lenkrollen ausgeführt sind. In dieser Ausführungsform können auf aufwendige Umsetzeinrichtungen zur Richtungsänderung des Transportfahrzeuges oder Weicheneinrichtungen verzichtet werden.

Alternativ kann das Transportfahrzeug mit geschlepptem Antrieb oder selbstfahrend ausgeführt sein.

In einer sehr vorteilhaften Ausführungsform ist die Energie für den Antrieb und/oder die Positioniersteuerung berührungslos auf das Transportfahrzeug übertragbar.

Eine besonders vorteilhafte Anwendung des Transportfahrzeuges findet sich in der Automobilfertigung und insbesondere in einer Karosserie-Fertigungsstraße zur Herstellung von Fahrzeugkarosserien bestehend aus mehreren Transportfahrzeugen zum Transportieren von Bauteilen und mehreren Arbeitsstationen, in denen die Transportfahrzeuge positionierbar sind. Durch die Zeitersparnisse beim Positionieren lassen sich die Taktzeiten in der Karosserie-Fertigungsstraße durch kürzere Nebenzeiten, Transport- und Positionierzeiten, deutlich verkürzen, wodurch ein höherer Nutzungsgrad der Anlage erreicht werden kann.

Die vorliegende Erfindung wird anhand der beiliegenden, beispielhaften und nicht einschränkenden Figuren 1 bis 7 beschrieben. Dabei zeigen:
Fig.1 bis 3 eine Drauf-, Auf- und Seitenansicht eines Transportfahrzeuges mit einer erfindungsgemäßen Positionierung in vertikaler Richtung,
Fig. 4 bis 6 eine Drauf-, Auf- und Seitenansicht eines Transportfahrzeuges mit einer erfindungsgemäßen Positionierung in vertikaler Richtung und quer zur Fahrtrichtung und
Fig.7 eine spezielle Ausführungsform einer erfindungsgemäßen Positioniereinrichtung.

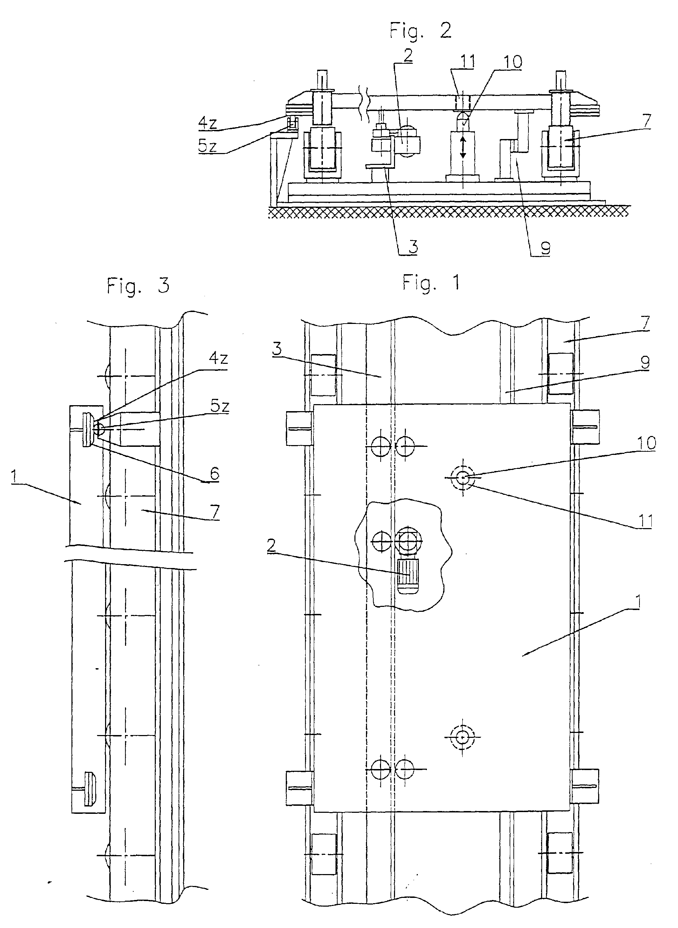

Die Figuren 1 bis 3 werden in der Folge gemeinsam beschrieben. Es ist ein Transportfahrzeug 1 dargestellt, welches auf einer Rollenbahn 7 läuft. Das Transportfahrzeug 1 dient zum Transport von beliebigen Bauteilen oder Gütern, vorzugsweise zwischen Arbeitsstationen in einer Bearbeitungsstrasse, z.B. eine Karosserieschweißstrasse. Das Transportfahrzeug 1 wird mit einer Führungseinrichtung 3, vorzugsweise eine Führungsschiene, entlang einer bestimmten Bahn geführt und durch einen Antrieb 2 angetrieben. Der Antrieb 2 greift dabei direkt an der Führungseinrichtung 3 an, wodurch die Position des Transportfahrzeuges 1 auf der Rollenbahn 7 bestimmt ist. Bei diesem Ausführungsbeispiel besteht der Antrieb 2 aus zwei Rollen, einer angetriebenen und einer frei drehbaren, die zu beiden Seiten der Führungsschiene angreifen. Zusätzlich befinden sich an den beiden Enden des Transportfahrzeuges 1 jeweils ein weiteres Rollenpaar, um das Transportfahrzeug 1 sicher in Spur zu halten. Natürlich ist es im Rahmen der vorliegenden Erfindung möglich jeden beliebigen anderen Antrieb vorzusehen.
Weiteres ist eine Energiezuführeinrichtung 9 vorgesehen, die aus zwei zugehörigen Teilen besteht, wobei sich ein Teil direkt am Transportfahrzeug 1 befindet und der zweite, zugehörige Teil entlang der Rollenbahn 7 befestigt ist. Durch diese Einrichtung wird das Transportfahrzeug 1 mit Energie in jeglicher notwendigen Form, z.B. elektrisch, hydraulisch oder pneumatisch, versorgt und zusätzlich noch zur Datenübertragung, z.B. zur Steuerung verwendet. Die Energieübertragung kann sowohl unter direktem Kontakt, z.B. ein Schleifkontakt, oder berührungslos erfolgen. Die Ausführung dieser Energiezuführeinrichtung 9 obliegt dabei im speziellen einem entsprechenden Fachmann.
Zur Positionierung des Transportfahrzeuges 1 in vertikaler Richtung besitzt das Transportfahrzeug 1 in der hier dargestellten Ausführungsform vier Referenzflächen 4z, die an beiden Enden mit einer Anlaufschräge 6z versehen sind. Dadurch ist es unter Anderem möglich, das Fahrzeug in beide Richtungen zu betreiben. In einer Arbeitsstation befinden sich vier zugehörige stationäre Gleitelemente, die bei dem vorliegenden Ausführungsbeispiel als Referenzrollen 5z ausgebildet sind. Die Referenzflächen 4z und die Referenzrollen 5z sind zueinander so eingestellt, dass beim Einfahren des Transportfahrzeuges 1 in die Arbeitsstation die Referenzrollen 5z über die Anlaufschrägen 6 auf die zugehörigen Referenzflächen 4z auflaufen und so das Transportfahrzeug 1 durch die Bewegung des Transportfahrzeuges 1 in vertikaler Richtung angehoben wird. Die Referenzflächen 4z und Referenzrollen 5z sind dabei so ausgeführt, dass eine genaue Positionierung in vertikaler Richtung innerhalb der Arbeitsstation möglich ist. Selbstverständlich ist es auch denkbar diese Positionierung nicht nur in Arbeitsstationen vorzusehen, vielmehr ist eine solche Positioniereinrichtung an jeder beliebigen Stelle der Rollenbahn 7 möglich. Weiteres ist es bei dem dargestellten Ausführungsbeispiel notwendig, dass der Antrieb 2 und/oder die Führungseinrichtung 3 und die Energieübertragungseinheit 9 eine vertikale Ausgleichsbewegung beim Positionieren zulassen. Die genaue Ausführung zum Durchführen der Ausgleichsbewegung obliegt dabei einem entsprechenden Fachmann und wird nicht näher beschrieben.
In den Fig. 2 und 3 ist ein Teil des Transportfahrzeuges 1 jeweils in einer Transportposition, also nicht angehoben, und ein anderer Teil in einer angehobenen Position dargestellt.
Um das Transportfahrzeug 1 auch in Richtung quer zur Fahrtrichtung und in Fahrtrichtung genau positionieren zu können, sind bei dieser Ausführungsform in der Arbeitsstation zwei Zentrierdorne 10 vorgesehen, die in zugehörige Zentrierbohrungen eingefahren werden und so das Transportfahrzeug 1 in der Ebene genau ausrichten. Es sind natürlich auch andere Zentriervorrichtungen denkbar und durch die vorliegende Erfindung umfasst.

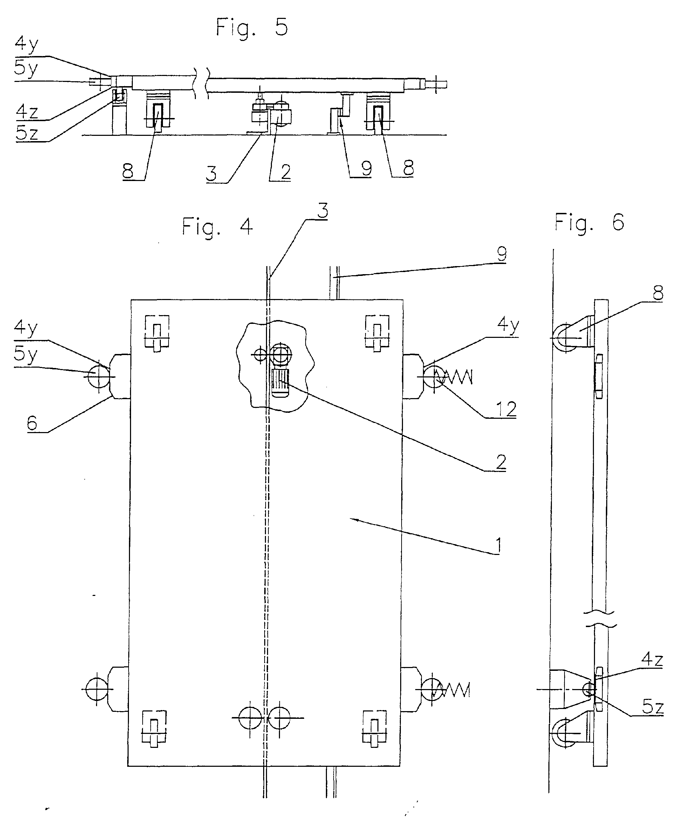

Die Fig. 4 bis 6 werden wiederum gemeinsam beschrieben. Es ist wieder ein Transportfahrzeug 1 dargestellt, welches in dieser Ausführungsform jedoch mit Bockrollen 8 versehen ist und auf diesen zwischen den Arbeitsstationen bewegt wird. In einer weiteren möglichen Ausführungsform können mindestens zwei dieser Bockrollen 8 als Lenkrollen ausgebildet sein, wodurch das Transportfahrzeug 1 in der Lage ist sehr einfach Richtungsänderungen vorzunehmen, ohne aufwendige Umsetzstationen oder weiträumige Radien der Führungsbahn notwendig zu machen.
Zum Antrieb 2, der Führungseinrichtung 3 und der Energiezuführeinheit 9 gilt das bereits bei den Fig. 1 bis 3 gesagte.
Zusätzlich zu der bereits beschriebenen Positioniereinheit zur Positionierung des Transportfahrzeuges 1 in vertikaler Richtung besitzt das Transportfahrzeug 1 eine eigene Positioniereinrichtung quer zur Fahrtrichtung des Transportfahrzeuges 1. Das Transportfahrzeug 1 besitzt zusätzlich zu den vier Referenzflächen 4z an einer Seite des Transportfahrzeuges 1 noch zwei Referenzflächen 4y zur Positionierung quer zur Fahrtrichtung. In der Arbeitsstation oder einer beliebigen anderen Stelle der Führungsbahn des Transportfahrzeuges 1 sind zwei zugehörige stationäre Referenzrollen 5y vorgesehen, die durch die Bewegung des Transportfahrzeuges 1 über Anlaufschrägen 6 auf die Referenzflächen 4y auflaufen und somit das Transportfahrzeug 1 in eine definierte Position quer zur Fahrtrichtung bringen. Um die Positionierung weiter zu unterstützen, sind an der gegenüberliegenden Seite des Transportfahrzeuges 1 zwei gefederte Gegendruckrollen 12 vorgesehen, die gleichzeitig mit den Referenzrollen 5y auf Referenzflächen 4y auflaufen und durch den Druck der Federn dafür sorgen, dass das Transportfahrzeug 1 sicher und genau durch die beiden Referenzrollen 5y in Richtung quer zur Fahrtrichtung positionierbar ist. Um die Positionierung des Transportfahrzeuges 1 zu ermöglichen, ist es notwendig, dass der Antrieb 2 und/oder die Führungseinrichtung 3 und die Energieübertragungseinheit 9 in Richtung quer zur Fahrtrichtung eine Ausgleichsbewegung zulassen.
Natürlich ist es auch denkbar anstelle der Gegendruckrollen 12 ebenfalls stationäre Referenzrollen 4y zu verwenden.
In den Fig. 5 und 6 ist ein Teil des Transportfahrzeuges 1 jeweils in einer Transportposition, also nicht angehoben und nicht in Richtung quer zur Fahrtrichtung positioniert, und ein anderer Teil in einer angehobenen und positionierten Position dargestellt.
In dieser Ausführungsform ist der Antrieb 2 an einem Ende des Transportfahrzeuges 1 angebracht. Dadurch reicht ein weiteres Rollenpaar am anderen Ende für die Spursicherheit des Transportfahrzeuges 1 aus.
Die Positionierung in Fahrtrichtung wird beispielsweise durch einen nicht dargestellten Anschlag erreicht, gegen den das Transportfahrzeug 1 fährt. Es sind aber natürlich auch beliebige andere Positioniereinrichtungen, wie ein frequenzgesteuerter Antrieb oder Servoantrieb, denkbar.

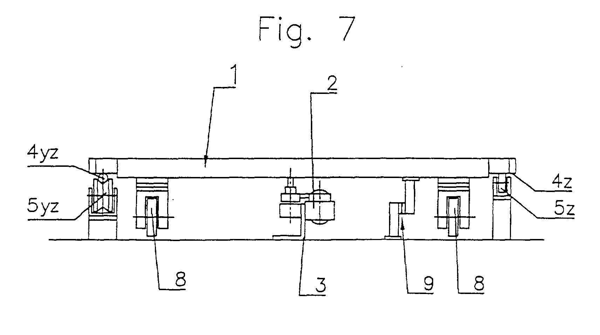

In Fig. 7 ist eine weitere mögliche Ausführungsform einer erfindungsgemäßen Positioniereinrichtung dargestellt. Hier ist eine Referenzrolle 5yz und eine zugehörige Referenzfläche 4yz so ausgeführt, dass damit gleichzeitig eine Positionierung in vertikaler Richtung und in Richtung quer zur Fahrtrichtung möglich ist.
Die Referenzrolle 5yz ist doppelkegelförmig ausgeführt und fährt auf eine zylinderförmige Referenzfläche 4yz auf. Dadurch wird das Transportfahrzeug 1 in vertikaler Richtung angehoben und gleichzeitig durch den Doppelkegel in Richtung quer zur Fahrtrichtung positioniert. Sinnvollerweise sind zur sicheren Positionierung nur auf einer Seite des Transportfahrzeuges 1 solche Referenzrollen 5yz und Referenzflächen 4yz vorgesehen, dies obliegt aber letztendlich einem entsprechenden Fachmann.

Die Anzahl und die Position der Referenzrollen 5z, 5y und 5yz und der Referenzflächen 4z, 4y und 4yz sowie das Vorhandensein, die Position und die Anzahl der gefederten Gegendruckrollen 12 ist durch diese Beschreibung in keinster Weise eingeschränkt. Weiteres können die Referenzflächen und die zugehörigen Gleitelemente im Rahmen der vorliegenden Erfindung beliebig geformt sein.
Für die Grundidee der Erfindung ist es außerdem unerheblich ob die Referenzflächen am Transportfahrzeug 1 und die zugehörigen Gleitelemente stationär angeordnet sind, oder umgekehrt.
Zusätzlich können die Referenzflächen 4z, 4y und 4yz und/oder die Referenzrollen 5z, 5y und 5yz verstellbar und/oder justierbar ausgeführt sein, um die genaue Positionierung der Transportfahrzeuge 1 im Betrieb sicherzustellen.
Es sind alle diesbezüglichen Möglichkeiten durch die vorliegende Erfindung umfasst und es liegt in der Entscheidung eines Fachmannes, diese der entsprechenden Anwendung optimal anzupassen.

Der Antrieb ist in den beschriebenen Ausführungsbeispielen am Transportfahrzeug 1 befestigt und das Transportfahrzeug 1 selbstfahrend ausgeführt. Natürlich ist es im Rahmen der vorliegenden Erfindung auch möglich das Transportfahrzeug 1 nicht selbstfahrend, z.B. in einer geschleppten oder geschobenen Ausführungsvariante, auszuführen. Insbesondere ist auch die Art der Bewegungsübertragung, ob Reibrollen, Zahnstange mit zugehörigen Zahnrad oder eine beliebige andere Variante, frei wählbar.

## Patentansprüche

1. Transportfahrzeug, beispielsweise ein Skid, zum Transportieren von Bauteilen, beispielsweise Karosserieteile oder Frames, mit einem Antrieb (2) zum Bewegen des Transportfahrzeuges in Längsrichtung, einer Führungseinrichtung (3) zum Führen des Transportfahrzeuges (1), z.B. Führungsschienen, und einer Positioniereinrichtung zum Positionieren des Transportfahrzeuges (1) in vertikaler Richtung und/oder in Richtung quer zur Fahrtrichtung, **dadurch gekennzeichnet, dass** zur Positionierung des Transportfahrzeuges (1) in vertikaler Richtung zumindest eine Referenzfläche (4z) und zumindest ein zugehöriges Gleitelement (5z) vorgesehen sind, wobei die Referenzfläche (4z) und das Gleitelement (5z) relativ zueinander bewegbar sind und dass das Transportfahrzeug (1) beim Auflaufen des Gleitelementes (5z) auf die Referenzfläche (4z) durch die Längsbewegung des Transportfahrzeuges (1) zumindest in der vertikalen Richtung selbstständig positionierbar ist.

2. Transportfahrzeug nach Anspruch 1, **dadurch gekennzeichnet, dass** der Antrieb (2) und die Führungseinrichtung (3) an zumindest einem Ende des Transportfahrzeugs (1) als Positioniereinrichtung in Richtung quer zur Fahrtrichtung ausführbar sind.

3. Transportfahrzeug nach Anspruch 1 oder 2, **dadurch gekennzeichnet, dass** zur eindeutigen Positionierung des Transportfahrzeuges (1) in der Richtung quer zur Fahrtrichtung und/oder in Fahrtrichtung zumindest ein Zentrierdorn (10) mit zumindest einer zugehörigen Zentrierbohrung (11) vorgesehen ist und dass der Antrieb (2) und/oder die Führungseinrichtung (3) in Richtung quer und/oder längs zur Fahrtrichtung eine Ausgleichsbewegung zulassen.

4. Transportfahrzeug nach Anspruch 1 oder 2, **dadurch gekennzeichnet, dass** zur eindeutigen Positionierung des Transportfahrzeuges (1) in der Richtung quer zur Fahrtrichtung auf zumindest einer Seite zumindest eine Referenzfläche (4y) und zumindest ein zugehöriges Gleitelement (5y) vorgesehen sind und dass das Transportfahrzeug (1) beim Auflaufen des Gleitelementes (5y) auf die Referenzfläche (4y) durch die Längsbewegung des Transportfahrzeuges (1) in Richtung quer zur Fahrtrichtung selbstständig positionierbar ist.

5. Transportfahrzeug nach Anspruch 4, **dadurch gekennzeichnet, dass** in der Richtung quer zur Fahrtrichtung auf einer Seite des Transportfahrzeuges (1) zumindest eine Referenzfläche (4y) und ein zugehöriges Gleitelement (5y) und auf der gegenüberliegenden Seite zumindest ein gefedertes Gegendruckelement (12) vorgesehen sind.

6. Transportfahrzeug nach Anspruch 4, **dadurch gekennzeichnet, dass** an beiden Seiten des Transportfahrzeuges (1) zumindest je eine Referenzfläche (4y) und zumindest je ein zugehöriges Gleitelement (5y) vorgesehen sind.

7. Transportfahrzeug nach einem der Ansprüche 1 bis 6, **dadurch gekennzeichnet, dass** an zumindest einer Referenzfläche (4y, 4z) eine Anlaufschräge (6) vorgesehen ist.

8. Transportfahrzeug nach einem der Ansprüche 1 bis 7, **dadurch gekennzeichnet, dass** die Referenzflächen (4y, 4z) am Transportfahrzeug (1) oder stationär und die zugehörigen Gleitelemente (5y, 5z) entsprechend stationär oder am Transportfahrzeug (1) angeordnet sind.

9. Transportfahrzeug nach einem der Ansprüche 4 bis 7, **dadurch gekennzeichnet, dass** zumindest ein Gleitelement (5z) zum vertikalen Positionieren und/oder zumindest ein Gleitelement (5y) zum Positionieren in der Richtung quer zur Fahrtrichtung schräg gestellt ist, dass durch die Schrägstellung das Transportfahrzeuges (1) gleichzeitig in der Richtung quer zur Fahrtrichtung und in der vertikalen Richtung positionierbar ist.

10. Transportfahrzeug nach Anspruch 9, **dadurch gekennzeichnet, dass** zumindest ein Gleitelement (5yz) doppelkegelförmig ausgeführt ist und auf zugehörige entsprechend geformte Referenzflächen (4yz), z.B. ein dachförmiges oder zylindrisches Schienenstück, auflaufbar ist.

11. Transportfahrzeug nach einem der Ansprüche 1 bis 10, **dadurch gekennzeichnet, dass** die Gleitelemente (5y, 5z) und/oder die Referenzflächen (4y, 4z) zur Positionierung in der Richtung quer zur Fahrtrichtung und/oder vertikalen Richtung justierbar sind.

12. Transportfahrzeug nach einem der Ansprüche 1 bis 11, **dadurch gekennzeichnet, dass** als Gleitelement (5y, 5z) eine Referenzrolle vorgesehen ist.

13. Transportfahrzeug nach einem der Ansprüche 1 bis 12, **dadurch gekennzeichnet, dass** zur Positionierung des Transportfahrzeuges (1) in Fahrtrichtung ein Anschlag vorgesehen ist.

14. Transportfahrzeug nach einem der Ansprüche 1 bis 12, **dadurch gekennzeichnet, dass** zur Positionierung des Transportfahrzeuges (1) in Fahrtrichtung ein frequenzgeregelter Antrieb oder ein Servoantrieb vorgesehen ist.

15. Transportfahrzeug nach einem der Ansprüche 1 bis 14, **dadurch gekennzeichnet, dass** das Transportfahrzeug (1) auf einer Rollenbahn (7) bewegbar ist.

16. Transportfahrzeug nach einem der Ansprüche 1 bis 14, **dadurch gekennzeichnet, dass** am Transportfahrzeug (1) Bockrollen (8) vorgesehen sind auf denen das Transportfahrzeug (1) bewegbar ist.

17. Transportfahrzeug nach Anspruch 16, **dadurch gekennzeichnet, dass** zumindest zwei Bockrollen (8) als Lenkrollen ausgeführt sind.

18. Transportfahrzeug nach einem der Ansprüche 1 bis 17, **dadurch gekennzeichnet, dass** das Transportfahrzeug (1) mit geschleppten Antrieb ausgeführt ist.

19. Transportfahrzeug nach einem der Ansprüche 1 bis 17, **dadurch gekennzeichnet, dass** das Transportfahrzeug (1) selbstfahrend ausgeführt ist.

20. Transportfahrzeug nach einem der Ansprüche 1 bis 19, **dadurch gekennzeichnet, dass** das die Energie für den Antrieb (2) und/oder die Positioniersteuerung berührungslos mit einer geeigneten Energieübertragungseinheit (9) auf das Transportfahrzeug (1) übertragbar ist.

21. Verfahren zum Positionieren eines mit Bauteilen, beispielsweise Karosserieteilen oder Frames, bestückten Transportfahrzeuges (1), beispielsweise ein Skid, in vertikaler Richtung und/oder in Richtung quer zur Fahrtrichtung, **dadurch gekennzeichnet, dass** das beim Auffahren zumindest eines Gleitelementes (5z), vorzugsweise drei oder vier Gleitelemente (5z), auf zumindest eine, vorzugsweise drei oder vier, zugehörige Referenzflächen (4z) das Transportfahrzeug (1) in der vertikalen Richtung selbsttätig, ausschließlich durch die Längsbewegung des Transportfahrzeuges (1) auf eine bestimmte vorgegebene Position positioniert wird.

22. Verfahren nach Anspruch 21, **dadurch gekennzeichnet, dass** das Transportfahrzeug (1) zumindest an einem Ende durch den Antrieb (2) und die zugehörige Führungseinrichtung (3) in Richtung quer zur Fahrtrichtung positioniert wird.

23. Verfahren nach Anspruch 21, **dadurch gekennzeichnet, dass** das beim Auffahren zumindest eines Gleitelementes (5y), vorzugsweise zwei Gleitelemente (5y), auf zumindest eine, vorzugsweise zwei, zugehörige Referenzflächen (5y) das Transportfahrzeug (1) in Richtung quer zur Fahrtrichtung positioniert wird.

24. Anwendung des Transportfahrzeuges nach einem der Ansprüche 1 bis 20 in der Automobilfertigung.

25. Anwendung nach Anspruch 24 in einer Karosserie-Schweißstraße zur Herstellung von Fahrzeugkarosserien bestehend aus mehreren Transportfahrzeugen (1) zum Transportieren von Bauteilen und mehreren Arbeitsstationen, in denen die Transportfahrzeuge (1) positionierbar sind.
